(19) Europäisches Patentamt
European Patent Office
Office européen des brevets

(11) **EP 1 466 772 B1**

(12) **EUROPÄISCHE PATENTSCHRIFT**

(45) Veröffentlichungstag und Bekanntmachung des Hinweises auf die Patenterteilung:
**23.12.2009   Patentblatt 2009/52**

(51) Int Cl.:
*B60K 7/00* (2006.01)   *F16H 61/04* (2006.01)
*B60H 1/02* (2006.01)

(21) Anmeldenummer: 04101337.6

(22) Anmeldetag: **31.03.2004**

(54) **Antriebssystem für Fahrzeuge**

Vehicle driving system

Système d'entraînement pour véhicule

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.04.2003   DE 10316862**

(43) Veröffentlichungstag der Anmeldung:
**13.10.2004   Patentblatt 2004/42**

(73) Patentinhaber: **DEERE & COMPANY**
**Moline, Illinois 61265-8098 (US)**

(72) Erfinder:
• **Tarasinski, Nicolai, Dr.**
**67227 Frankenthal (DE)**
• **Glaser, Fritz, Dr.**
**66482 Zweibrücken (DE)**
• **Kneer, Bernd**
**68519 Viernheim (DE)**

(74) Vertreter: **Holst, Sönke et al**
**Deere & Company**
**European Office**
**Global Intellectual Property Services**
**John-Deere-Strasse 70**
**68163 Mannheim (DE)**

(56) Entgegenhaltungen:
**EP-A- 1 077 150      DE-A1- 10 126 348**
**DE-A1- 19 723 776    DE-A1- 19 919 454**
**DE-A1- 19 954 544    DE-C1- 19 615 742**
**GB-A- 2 346 124      US-A1- 2001 003 109**

• **PATENT ABSTRACTS OF JAPAN Bd. 2000, Nr. 14, 5. März 2001 (2001-03-05) -& JP 2000 308206 A (TOYOTA MOTOR CORP), 2. November 2000 (2000-11-02)**

**EP 1 466 772 B1**

**Beschreibung**

Die Erfindung betrifft ein Antriebssystem für Fahrzeuge, insbesondere für Nutzfahrzeuge wie landwirtschaftliche oder industrielle Schlepper, umfassend eine Vorderachse mit Vorderrädern und eine Hinterachse mit Hinterrädern.

Für eine Anpassung der Antriebsleistung an unterschiedliche Fahranforderungen werden insbesondere Fahrzeugantriebe vorgeschlagen, bei denen jeder Fahrzeugachse oder jedem Rad des Fahrzeugs ein gesonderter Antrieb zugeordnet ist.

So beschreibt die EP 812 720 A1 ein Fahrzeug mit einem Antriebssystem, bei dem ein durch einen Verbrennungsmotor angetriebener Generator die elektrische Energie für Elektromotoren liefert. Die Räder der Vorderachse des Fahrzeugs werden durch je einen zugehörigen Elektromotor angetrieben, während die Hinterräder mechanisch angetrieben werden, indem der Verbrennungsmotor eine der Hinterachse des Fahrzeugs zugeordnete Antriebswelle antreibt. Jedem Rad der Hinterachse ist ein Summengetriebe und ein Elektromotor zugeordnet. Im Summengetriebe werden die Antriebsleistungen der Antriebswelle und des zugehörigen Elektromotors zusammengeführt und an das zugehörige Hinterrad abgegeben. Zwischen dem Verbrennungsmotor und den beiden Summengetrieben ist ein zwischen wenigstens zwei Übertragungsverhältnissen umschaltbares Umschaltgetriebe vorgesehen. Beim Umschalten des Umschaltgetriebes tritt eine Zugkraftunterbrechung an den Hinterrädern auf. Dies kann eine Verlangsamung des Fahrzeugs zur Folge haben und sich als Schaltruck unangenehm bemerkbar machen. Es hat sich gezeigt, dass auch bei Verwendung eines unter Last schaltbaren Umschaltgetriebes die genannten Nachteile nicht vermieden werden können.

Die EP 1 077 150 A2 offenbart eine zusätzliche Antriebsquelle zur Verringerung von Antriebsstrangschwingungen in einem Fahrzeug. Demgemäß weist das Fahrzeug einen Verbrennungsmotor sowie eine zusätzliche Antriebsquelle in Gestalt einer elektrischen Maschine auf, wobei ein mittels der elektrischen Maschine erzeugbares Zusatzdrehmoment derart mit einem von dem Verbrennungsmotor gelieferten Drehmoment überlagerbar ist, dass Schaltschwingungen, wie sie im Antriebsstrang beim Umschalten eines von dem Verbrennungsmotor angetriebenen Fahrzeuggetriebes auftreten, unterdrückt werden.

Ferner wird in der DE 199 19 454 A1 ein Antriebssystem für ein Fahrzeug vorgeschlagen, bei dem die Räder der Vorderachse mit einem Gangwechselgetriebe und die Räder der Hinterachse mit einer elektrischen Maschine antreibbar sind. Falls ein Schaltvorgang des Gangwechselgetriebes erfolgt und somit eine Kraftübertragungslücke an den Rädern der Vorderachse auftritt, wird kurzzeitig die elektrische Maschine höher belastet, um die Kraftübertragungslücke während des Schaltvorgangs zu kompensieren. Insbesondere bei der Durchführung von Ladearbeiten mittels eines an einem landwirtschaftlichen Schlepper angebrachten Frontladers besteht die Möglichkeit, dass sich die Ballastierung des Schleppers von der Hinterachse in Richtung der Vorderachse verlagert. Der hierdurch verursachte Traktionsverlust an den Rädern der Hinterachse kann dazu führen, dass die Kraftübertragungslücke lediglich unvollständig kompensiert wird.

Die der Erfindung zugrunde liegende Aufgabe wird darin gesehen, ein Antriebssystem der eingangs genannten Art derart auszubilden, dass die genannten Probleme überwunden werden. Insbesondere soll vermieden werden, dass während des Schaltvorgangs die Fahrzeuggeschwindigkeit absinkt und störende Schaltrucke auftreten.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das Antriebssystem für Fahrzeuge, insbesondere für Nutzfahrzeuge wie landwirtschaftliche oder industrielle Schlepper, umfasst eine Vorderachse mit Vorderrädern und eine Hinterachse mit Hinterrädern. Erfindungsgemäß ist für jedes der Räder ein gesonderter Einzelradantriebsmotor und ein in dessen Antriebsstrang liegendes Umschaltgetriebe mit wenigstens zwei Drehzahlübertragungsstufen vorgesehen, wobei eine Steuereinrichtung bei Vorliegen eines mittels einer Umschalterfassungseinrichtung übermittelten Umschaltbefehls automatisch zunächst die Umschaltgetriebe erster diagonal gegenüberliegender Räder gleichzeitig schaltet und die Antriebsmotoren der zweiten diagonal gegenüberliegenden Räder für den Zeitraum des Umschaltvorgangs höher belastet. Anschließend werden von der Steuereinrichtung die noch nicht geschalteten, den zweiten diagonal gegenüberliegenden Rädern zugeordneten Umschaltgetriebe gleichzeitig geschaltet und die Antriebsmotoren der ersten diagonal gegenüberliegenden Räder für den Zeitraum des Umschaltvorgangs höher belastet.

Da die Erhöhung der Belastung der Abtriebsmotoren an jeweils diagonal gegenüberliegenden Rädern des Fahrzeugs erfolgt, können mögliche Traktionsverluste, wie sie aufgrund einer Verlagerung der Ballastierung zwischen der Vorder- und Hinterachse des Fahrzeugs verursacht werden, weitgehend ausgeglichen werden. Hierdurch lässt sich vermeiden, dass es während des Schaltvorgangs zum Absinken der Fahrzeuggeschwindigkeit und damit zum Auftreten störender Schaltrucke führt.

Bei Ackerschleppern kann das Umschaltgetriebe beispielsweise einen ersten Getriebebereich aufweisen, der Fahrgeschwindigkeiten bis 27 km/h erlaubt und hauptsächlich beim Arbeitsbetrieb verwendet wird. Ein zweiter Getriebebereich lässt Fahrgeschwindigkeiten bis 65 km/h zu und wird bei Straßenfahrten verwendet. Bei derart großen Übersetzungssprüngen (1:2,4) treten normalerweise störende Umschaltrucke auf, wenn beim Beschleunigen oder Verzögern des Fahrzeugs durch die Bedienperson oder durch eine Schaltautomatik eine Gang- bzw. Bereichsumschaltung erfolgt. Die Schaltrucke sind besonders bei Verwendung von automatisch geschalteten Getrieben unangenehm, da sie hier

2

unerwartet auftreten. Diese Schaltrucke lassen sich durch Verwendung eines erfindungsgemäßen Antriebssystems vermeiden.

Als Umschaltgetriebe können Lastschaltgetriebe verwendet werden. Es ist auch von Vorteil, ein Schaltgetriebe zu verwenden, in dessen Antriebsstrang eine Kupplung zur Unterbrechung des Kraftflusses angeordnet ist.

Eine besonders herauszustellende vorteilhafte Weiterbildung der Erfindung sieht vor, als Achs- oder Einzelradantriebsmotoren elektrische Maschinen oder Hydraulikmotoren vorzusehen. Elektrische oder hydraulische Einzelradantriebsmotoren werden im Folgenden auch als Radmotoren bezeichnet. Insbesondere elektrische Maschinen haben den Vorteil, dass sie für eine kurze Zeit stark überlastet werden können, ohne dass sie beschädigt werden. Die zulässige aufgenommene Leistung bzw. das maximal abgegebene Drehmoment können für kurze Zeit beispielsweise um den Faktor 2 gesteigert werden. Es ist somit möglich, erfindungsgemäße Umschaltungen auch dann vorzunehmen, wenn dem Fahrzeug eine maximale Antriebsleistung abverlangt wird. Auch bei einem solchen Betrieb ist eine kurzzeitige Steigerung der Antriebsleistung der jeweils betroffenen elektrischen Maschine zulässig.

Als Energiequelle für die elektrischen Maschinen dient vorzugsweise ein auf dem Fahrzeug montierbarer elektrischer Energiespeicher und/oder ein durch einen Verbrennungsmotor angetriebener Generator.

Vorzugsweise sind die elektrische Maschine und deren Ansteuerung derart ausgelegt, dass sich die elektrische Maschine sowohl als Elektromotor, der das zugehörige Rad antreibt, als auch als Generator, der das zugehörige Rad abbremst, betreiben lässt.

Bei Verwendung eines die elektrische Energie für die elektrischen Maschinen bereitstellenden Generators sind diesem vorzugsweise ein Umrichter und ein Zwischenkreis nachgeordnet, die auch einen motorischen Betrieb des Generators zulassen. Dies ermöglicht es, das Abbremsen des Fahrzeugs elektrisch zu unterstützen, indem die Einzelradantriebsmotoren generatorisch betrieben werden. Die von ihnen erzeugte elektrische Energie wird dem Generator zugeführt, der dann als Elektromotor arbeitet und die Drehzahl der Verbrennungsmaschine erhöht und dieser somit Energie zuführt, die als Bremsenergie das Fahrzeug verzögert ("elektrische Bremse").

Als ergänzende oder alternative "elektrische Bremse" können auch Bremswiderstände dienen, die die von den elektrischen Maschinen erzeugte elektrische Energie vernichten.

Eine bevorzugte Ausgestaltung der Erfindung sieht vor, dass das schaltbare Getriebe ein Planetengetriebe, insbesondere ein Lastschaltgetriebe oder ein Schaltgetriebe enthält. Es ist auch vorteilhaft, dem Einzelradantriebsmotor wenigstens ein die Drehzahl untersetzendes Endantriebsgetriebe, insbesondere ein Planetengetriebe, nachzuordnen. Damit lassen sich die Antriebsmotoren in günstigen Drehzahlbereichen betreiben.

Für eine kompakte Bauweise ist es von Vorteil, die Einzelradantriebsmotoren innerhalb der Radfelge der zugehörigen Räder anzuordnen. Desgleichen kann auch ein Umschaltgetriebe und/oder eine Radbremse und/oder eine dem Antriebsmotor nachgeordnete Planetenuntersetzungsstufe innerhalb der Radfelge oder im Nahbereich der Radfelgen angeordnet werden.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert. Es zeigen:

Fig. 1    eine schematische Ansicht eines Fahrzeugantriebssystems, und

Fig. 2    eine Schaltungsanordnung für elektrische Komponenten eines Antriebssystems gemäß Fig. 1.

In den Figuren werden gleichartige Bauteile und Komponenten mit den selben Bezugsziffern bezeichnet.

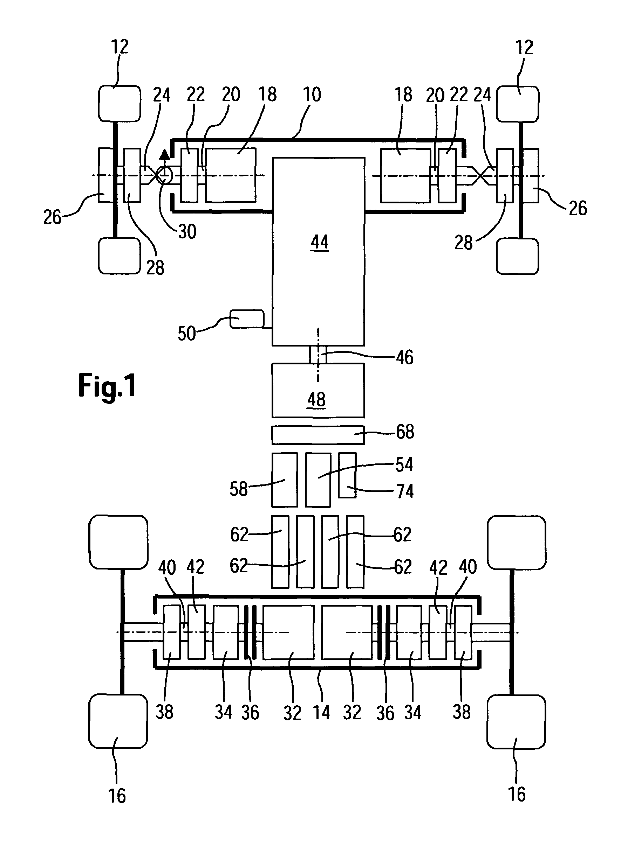

Das in Fig. 1 dargestellte Fahrzeugantriebssystem ist für einen landwirtschaftlichen Traktor vorgesehen und enthält eine Vorderachse 10 mit Vorderrädern 12 und eine Hinterachse 14 mit Hinterrädern 16.

Jedes Rad 12 der Vorderachse 10 wird durch einen zugehörigen Elektromotor 18 sowie ein nicht näher dargestelltes Umschaltgetriebe angetrieben. Eine Ausgangswelle 20 jedes Elektromotors 18 steht mit einer Eingangswelle eines Planetenuntersetzungsgetriebes 22 in Verbindung, die seine Ausgangsleistung über eine Antriebswelle 24, die ein Kardangelenk enthält, sowie eine Planetenenduntersetzungsstufe 26 an das Vorderrad 12 abgibt. In die Antriebswelle 24 ist eine mechanisch betätigbare Radbremse 28 integriert. Die Kardangelenke ermöglichen das Lenken der Vorderräder 12. Ein Lenkwinkelsensor 30 erfasst den Lenkwinkel der Vorderräder 12.

Jedes Rad 16 der Hinterachse 14 wird durch einen zugehörigen Elektromotor 32 angetrieben. Zwischen dem Elektromotor 32 und einem zwischen zwei Übertragungsverhältnissen umschaltbaren Umschaltgetriebe 34 ist eine Kupplung 36 angeordnet. Die Ausgangsdrehzahl des Umschaltgetriebes 34 wird in einer Planetenenduntersetzungsstufe 38 weiter herabgesetzt und dem zugehörigen Hinterrad 16 zugeführt. Auch hier ist in eine zwischen dem Umschaltgetriebe 34 und der Planetenenduntersetzungsstufe 38 verlaufende Antriebswelle 40 eine mechanisch betätigbare Radbremse 42 integriert.

Ein Verbrennungsmotor 44 treibt über eine Antriebswelle 46 einen Generator 48 an, der die elektrische Leistung für die Elektromotoren 18, 32 bereitstellt. Die Fahrzeuggeschwindigkeit wird durch einen Radarsensor 50 erfasst.

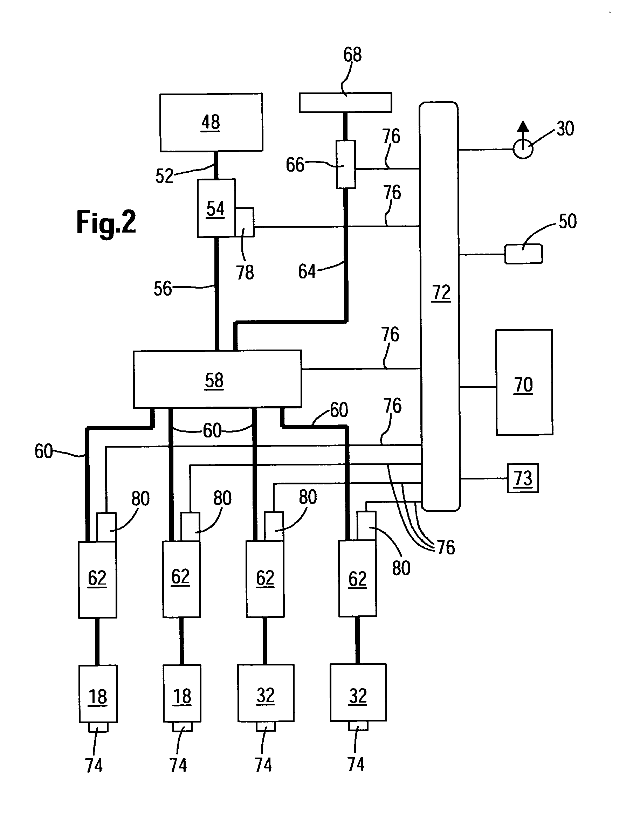

Wie aus Fig. 2 ersichtlich ist, steht der Generator 48 über ein Leistungskabel 52 mit einem Frequenzumrichter 54, der einen Generator-Zwischenkreis bildet, in Verbindung. Dem Frequenzumrichter 54 ist über ein weiteres Leistungskabel 56 ein Gleichstrom-Zwischenkreis 58 mit nicht näher dargestelltem Energiespeicher nachgeschaltet. Der Gleichstrom-Zwischenkreis 58 speist über weitere Leistungskabel 60 Frequenzumrichter 62, die den einzelnen Elektromotoren 18, 32 zugeordnet sind und diese mit elektrischer Energie versorgen. Der Gleichstrom-Zwischenkreis 58 steht des Weiteren über ein weiteres Leistungskabel 64 mit einem Bremswiderstandsteller 66 in Verbindung, an den ein oder mehrere gekühlte Bremswiderstände 68 angeschlossen sind.

Es ist eine als Microcontroller ausgebildete elektrische Steuereinheit 70 vorgesehen, die mit einem BUS-System 72 in Verbindung steht. An das BUS-System 72 sind des Weiteren der Lenkwinkelsensor 30, der Radarsensor 50, und eine Umschalterfassungseinrichtung 73 angeschlossen, so dass deren Signale an die Steuereinheit 70 übermittelt und dort verarbeitet werden können. Bei der Umschalterfassungseinrichtung 73 kann es sich um einen durch eine Bedienperson betätigbaren, nicht dargestellten Schalter oder um eine Steuereinrichtung handeln, die aufgrund von Fahrbedingungen automatisch ein Umschaltsignal erzeugt.

Es kann eine Vielzahl weiterer, nicht näher dargestellter elektrischer Sensoren und Eingabeeinrichtungen an das BUS-System 72 angeschlossen sein. Beispielsweise können die elektrischen Signale von Drehzahlsensoren 74, die die Drehzahl der Elektromotoren 18, 32 erfassen, sowie von nicht dargestellten Drehzahlsensoren, die die Raddrehzahlen erfassen, von Temperatursensoren, die die Temperatur der Elektromotoren 18, 32 erfassen, von Stellungssensoren, die die Gaspedalstellung und die Bremspedalstellung erfassen, und von Getriebeschaltsensoren, die Umschaltsignale für die Umschaltgetriebe erfassen, in das BUS-System 72 eingespeist werden, so dass auch diese Signale durch die Steuereinheit 70 erfasst und verarbeitet werden können.

Des Weiteren kann auch eine nicht dargestellte Eingabevorrichtung vorgesehen sein, durch die sich die Steuereinheit programmieren lässt und die die Eingabe von fahrzeugspezifischen Daten ermöglicht, wie Achsstand, Spurweite, Durchmesser der Vorder- und Hinterräder, Übersetzungsverhältnisse der Getriebe, maximal zulässige Drehzahlen für Getriebe und Elektromotoren und dergleichen.

Das BUS-System 72 steht über BUS-Systemkabel 76 mit einem Microcontröller 78 für den Frequenzumrichter 54, mit dem Gleichstrom-Zwischenkreis 58, mit den Microcontrollern 80 für die Frequenzumrichter 62 der Elektromotoren 18, 32 und mit dem Bremswiderstandsteller 66 in Verbindung, so dass sich diese durch die Steuereinheit 70 ansteuern lassen. Über die BUS-Systemkabel 76 werden von den Microcontrollern 78, 80 und dem Gleichstrom-Zwischenkreis 58 elektrische Daten über Strom, Spannung und Frequenz an die Steuereineinheit 70 zurückgemeldet, die die Berechnung von Drehmomenten, Leistungen und dergleichen ermöglichen. Die Steuereinheit 70 gibt über das BUS-System 72 auch elektrische Steuersignale an die Kupplungen 36 ab, was jedoch nicht näher dargestellt ist.

Durch das dargestellte Antriebssystem lässt sich ein Fahrzeug im Normalbetrieb durch alle vier von dem Generator 48 mit elektrischer Energie versorgten Elektromotoren 18, 32 antreiben. Wird das Fahrzeug derart beschleunigt oder verzögert, dass ein Gangwechsel an den Umschaltgetrieben erforderlich ist, um die Elektromotoren 18, 32 nicht mit zu hoher oder zu geringer Drehzahl zu betreiben, so wird die Leistung der Elektromotoren 18, 32 erster diagonal gegenüberliegender Räder 12, 16 heruntergefahren, und es wird die entsprechende Kupplung 36 an der Hinterachse 14 durch elektrische Signale geöffnet. Jetzt kann eine Umschaltung der den ersten diagonal gegenüberliegenden Rädern 12, 16 zugeordneten Umschaltgetriebe erfolgen. Die Kupplung 36 wird durch entsprechende elektrische Steuersignale wieder geschlossen und die elektrische Leistung der Elektromotoren 18, 32 hochgefahren.

Um eine Zugkraftunterbrechung während dieses Umschaltvorgangs zu vermeiden, werden zeitgleich die beiden Elektromotoren 18, 32 zweiter diagonal gegenüberliegender Räder 12, 16 angesteuert, um Drehmomente an den zweiten diagonal gegenüberliegenden Rädern 12, 16 zu erzeugen, die den an den ersten diagonal gegenüberliegenden Rädern 12, 16 auftretenden Zugkraftabfall ausgleichen. Die Steuereinheit 70 kann dabei die Ansteuerung der Elektromotoren 18, 32 derart synchronisieren, dass bei einer Rücknahme der Leistung der Elektromotoren 18, 32 an den ersten diagonal gegenüberliegenden Rädern 12, 16 die Leistung der Elektromotoren 18, 32 an den zweiten diagonal gegenüberliegenden Rädern 12, 16 entsprechend heraufgesetzt wird. Nach dem Umschalten der Umschaltgetriebe und dem Schließen der Kupplung 36 wird die Leistung der Elektromotoren 32 an den ersten diagonal gegenüberliegenden Rädern 12, 16 wieder angehoben und in gleichem Maße die Leistung der Elektromotoren 12 an den zweiten diagonal gegenüberliegenden Rädern 12, 16 abgesenkt.

Anschließend wird der Umschaltvorgang in der vorstehend beschriebenen Weise für die noch nicht geschalteten, den zweiten diagonal gegenüberliegenden Rädern 12, 16 zugeordneten Umschaltgetriebe vorgenommen.

Bei einem gut ballastierten Traktor werden bei der Nennzugleistung etwa 30 % der verfügbaren Zugleistung über die Vorderräder (15 % je Vorderrad) übertragen und etwa 70 % über die Hinterräder (35 % je Hinterrad). Wird die Leistung des Traktors zum Ziehen nicht voll ausgenutzt, weil beispielsweise nicht mit der maximal möglichen Zugleistung gefahren wird, wird die Zugkraftaufteilung auf die Vorderräder und die Hinterräder annähernd mit 30 % zu 70 % aufrecht erhalten. Dementsprechend teilen sich auch die niedrigeren gesamten Antriebsleistungen der Elektromotoren für vorn und hinten auf. Eine Nachregelung der Drehmomente an den einzelnen Rädern erfolgt in der Weise, dass möglichst gleiche Schlupfwerte für alle vier Räder eingestellt werden. Auf diese Weise werden unterschiedliche Radlasten und unterschiedliche Reibbeiwerte zwischen Reifen und Boden optimal berücksichtigt. Jedes Rad behält hierbei die größtmögliche Seitenführungskraft. Dies verbessert die Fahrstabilität erheblich und damit die Fahrsicherheit. Das Fahrzeug bricht nicht aus der gewünschten Bahn aus.

Um den Schlupf zu ermitteln, kann ein Radarsensor 50 zur Erfassung der tatsächlichen Fahrgeschwindigkeit v verwendet werden. Aus der Radumfangsgeschwindigkeit u und der tatsächlichen Fahrgeschwindigkeit v lässt sich der Schlupf s berechnen:

$$s = (u - v) / u \, .$$

In der Praxis ist es jedoch nicht unbedingt notwendig, den tatsächlichen Schlupfwert s für jedes Rad genau zu kennen. Wenn die Drehzahlen der Räder bei Geradeausfahrt und Kurvenfahrt der Abrollbedingung nach Ackermann entsprechen, ist gleicher Schlupf an allen Rädern vorhanden. Nach der Ackermannbedingung rollen die Räder eines Fahrzeugs auf Kreisbahnen um einen gemeinsamen Mittelpunkt. Aus der Fahrzeuggeometrie sind der Radstand, die Spurweiten der Achsen und der Lenkrollradius bekannt. Nach Ackermann lassen sich bei Kurvenfahrt anhand der berechenbaren Kurvenbahnen für die einzelnen Räder die Sollgeschwindigkeiten und Solldrehzahlen durch die elektronische Steuereinheit 70 genau berechnen. Der hierfür notwendige momentane Lenkwinkel wird über den Lenkwinkelsensor 30 ermittelt. Bei Geradeausfahrt sollen die Räder gleiche Umfangsgeschwindigkeit aufweisen. Das gewährleistet ebenfalls gleichen Schlupf an allen Rädern.

Innerhalb der jeweiligen Gänge der Umschaltgetriebe wird die Fahrgeschwindigkeit über die Drehzahlen der Elektromotoren 18, 32 eingestellt. Die erforderlichen Drehmomente werden so eingestellt, dass keine Verspannungen zwischen den einzelnen Rädern 12, 16 auftreten. Dies ist erreicht, wenn alle Räder 12, 16 den gleichen Schlupf aufweisen. Bei einem angetriebenem Rad 12, 16, bei dem ein höherer Schlupf als der Durchschnittswert aller vier Räder festgestellt wird, wird das antreibende Moment durch die Steuereinheit 70 verringert. Ist der Schlupf eines angetriebenen Rades 12, 16 geringer als der Durchschnitt aller vier Räder, wird das Antriebsmoment erhöht. Auf diese Weise erreichen alle vier Räder den gleichen Schlupf. Dieses Verfahren ermöglicht auch einen problemlosen Fahrbetrieb, wenn der Boden derart beschaffen ist, dass sich unterschiedliche Haftreibungsbeiwerte bzw. Triebkraftbeiwerte zwischen Reifen und Boden ergeben. Dies ermöglicht es, dass alle Räder entsprechend ihrer Radlast und den Bodenreibwerten gleichmäßig ziehen und alle Räder die jeweils größtmögliche Seitenführungskraft erhalten. Ein Rad mit hohem Schlupf verliert einen Großteil der möglichen Seitenführungskraft. Zu hoher Schlupf einzelner Räder kann im Extremfall zum Ausbrechen des Fahrzeugs aus der Fahrbahn führen, daher ist eine Kontrolle auf gleichmäßigen und niedrigen Schlupf aller Räder wichtig. Diese Aufgabe der Überwachung der Schlupfwerte der einzelnen Räder übernimmt die Steuereinheit 70, die Teil der Antriebssteuerung des Fahrzeugs ist. Im Fall einer geringen Bremsung, die nur über die Elektromotoren 18, 32 der einzelnen Radantriebe erfolgt, werden die Bremsmomente ebenfalls analog auf gleichen negativen Schlupf eingestellt.

Traktoren fahren auf fester Fahrbahn und auf weichen landwirtschaftlichen Böden. Entsprechend ergeben sich unterschiedliche übertragbare Zugkräfte und damit Drehmomente an den einzelnen Rädern 12, 16. Die Drehmomente lassen sich indirekt bestimmen. Der Fahrer gibt eine gewünschte Geschwindigkeit vor. Hierbei hat der Fahrzeugmotor 44 den Fahrwiderstand und die zusätzlich gewünschte Antriebsleistung (z.B. an einer nicht gezeigten Zapfwelle) zu überwinden. Hieraus ergibt sich die erforderliche Antriebsleistung durch den Fahrzeugmotor 44. Die Antriebsleistungen der einzelnen Elektromotoren 18, 32 bzw. deren Drehmomente werden entsprechend der Vorgabe aufgeteilt. 30 % der Antriebsleistung für die Vorderachse 10 bedeutet 15 % für einen Radmotor 18 der Vorderachse 10. Entsprechend werden 70 % der Antriebsleistung für die Hinterachse 14 aufgeteilt, das bedeutet 35 % für einen Radmotor 32 der Hinterachse 14. Die Elektromotoren 18, 32 werden hier auch als Radmotoren bezeichnet.

Für den Fall, dass die Fahrbahn eine gute Übertragung der Zugkraft zwischen den Reifen und dem Boden ermöglicht, sollte der Schlupf zwischen Reifen und Boden unter etwa 5 % bleiben. Jedoch entsteht bei jeder Zugleistung des Traktors ein gewisser Schlupf zwischen Reifen und Boden. Die Steuereinheit 70 überwacht die einzelnen Raddrehzahlen entweder über Drehzahlsensoren 74 an den Radmotoren 18, 32 oder bestimmt diese anhand der elektrischen Daten der Elektromotoren 18, 32. Diese begrenzt Abweichungen der Schlupfwerte der einzelnen Räder 12, 16 auf ein zulässiges Maß. Jeder Schlupfwert soll nicht mehr als beispielsweise maximal 5 % von seinem Sollwert abweichen. Ein Sollschlupfwert von 5 % sollte daher in den Grenzen zwischen 4,75 % und 5,25 % liegen. Die Aufteilung der Antriebsleistung und die Ansteuerung der Radmotoren 18, 32 übernimmt die elektronische Steuereinheit 70. Diese gibt an die den Radmotoren 18, 32 zugeordneten Frequenzumrichter 62 die nötigen Information hinsichtlich der Bereitstellung von Stromfluss, Spannung und Frequenz, um die geforderten Schlupfbedingungen zu erfüllen.

Bei einem Lenkeinschlag der Lenkachse 10 können die erforderlichen Antriebsdrehzahlen der Räder 12, 16 über die Ackermannbedingung festgelegt werden. Durch eine Berechnung anhand der Ackermannbedingung kann mittels der geometrischen Abrollumfänge auf den einzelnen Kreisbahnen vorausgesagt werden, welche Raddrehzahlen abhängig vom Lenkeinschlag erforderlich sind. Bei Kurvenfahrt fahren die Vorderräder 12 auf einem größeren Kreis als die Hinterräder 16 und müssen dementsprechend mit einer angepassten höheren Drehzahl als bei Geradeausfahrt angetrieben werden. Die Ackermannbedingung ergibt für jedes Rad 12, 16 die notwendige Antriebsdrehzahl.

Für den Fall, dass durch die Beschaffenheit der Fahrbahn die Zugkraft zwischen den Reifen und dem Boden nicht mehr zufriedenstellend übertragen wird, kann der Schlupfwert zwischen Reifen und Boden den Wert von beispielsweise 5 % übersteigen. Die Steuereinheit 70 übernimmt hierbei die Aufgabe, die Abweichungen der Schlupfwerte der einzelnen Räder 12, 16 auf ein zulässiges Maß zu begrenzen.

Das erforderliche Raddrehmoment ergibt sich als Produkt aus der Zugkraft je Rad und dessen Rollradius. Mittels der eingestellten Getriebeübersetzungen lässt sich das Moment jedes Elektromotors 18, 32 bestimmen. Moment und geforderte Raddrehzahl ergeben die Antriebsleistung für jeden Radmotor 18, 32.

Aus der gewünschten Fahrgeschwindigkeit ergibt sich die hierfür erforderliche Raddrehzahl. Aus dem Fahr- und Beschleunigungswiderstand errechnen sich die Drehmomente der Elektromotoren 18, 32. Aus Drehmoment und Drehzahl ergeben sich jeweils die erforderlichen Antriebsleistungen. Die gesamte erforderliche Antriebsleistung wird auf die vier Räder entsprechend der vorgegebenen Leistungsaufteilung von 15 % für je ein Vorderrad 12 und 35 % für je ein Hinterrad 16 aufgeteilt. Es erfolgt die Nachregelung der Drehmomente für jeden Radantrieb entsprechend der Vorgabe eines gleichen Schlupfes für alle Räder 12, 16, d.h. Nachregelung der Radrehzahlen bzw. Drehzahlen der Elektromotoren 18, 32 entsprechend der Ackermannbedingung. Diese Funktion übernimmt die Steuereinheit 70. Die Radlastverteilung kann sich in manchen Einsatzfällen stark verändern, beispielsweise bei voll beladener Frontladerschaufel und beim rückwärtsgerichteten Hinauffahren an einem steilen Hang. In diesem Fall wird den Elektromotoren 18 der Vorderräder 12 eine verhältnismäßig höhere Leistung abverlangt. Dabei kann in der Regel eine kurzzeitige Überlastung dieser Elektromotoren 18 durch höhere Abgabeleistung zugelassen werden, sofern dies vom Fahrer gewünscht wird. Infolge der Nachregelung auf gleichen Schlupf aller Räder 12, 16 entstehen keine Verspannungen im Antrieb und die höchstmögliche Seitenführungskraft bleibt erhalten. Eine hohe Seitenführungskraft ist wichtig bei rutschigen Bodenverhältnissen und an Hanglagen, um ein Ausbrechen des Fahrzeugs aus der Fahrspur zu vermeiden.

Ein Rad ist drehmomentfrei, wenn keine Spannung und kein Strom vom Frequenzumrichter 62 erzeugt und an den Radmotor 18, 32 gegeben wird und wenn das Rad 12, 16 nicht zum Antrieb des Elektromotors 18, 32 (generatorischer Betrieb) benutzt wird, wenn also elektrische Leistung weder dem Elektromotor 18, 32 zugeführt noch von diesem abgenommen wird. Ein relativ kleines Moment durch Reibleistung infolge Lagerreibung und Getriebeverlusten kann dabei jedoch noch vorhanden sein.

Um die Radantriebe gegen Überlast zu schützen, sind in den elektrischen Komponenten (Elektromotoren) Temperatursensoren vorgesehen. Diese geben Temperatursignale an die Steuereinheit 70 ab. Bei unzulässiger Erwärmung der Elektromotoren 18, 32 werden die angelegten Spannungen und Stromstärken durch die Steuereinheit 70 auf ein zulässiges Maß reduziert. In der Regel entsprechen diese Strom- und Spannungswerte denen für eine maximal zulässige Dauerlast. Daher führt normalerweise eine unzulässige Temperaturerhöhung zu einer Verringerung der Fahrgeschwindigkeit des Fahrzeugs, jedoch selbst bei besonders hoher Überlastung in der Regel nicht zu einem Stehenbleiben. Das gesamte Verhalten des Fahrzeugs ist so ausgelegt, dass die entsprechend dem Stand der Technik höchsten erforderlichen Zugkraftwerte auch mit dem erfindungsgemäßen Antriebssystem erreicht werden.

Auch wenn beim Bergabfahren mit höchster Geschwindigkeit die Bedienperson durch Betätigung des Gaspedals einen weiteren Beschleunigungswunsch einstellt, verringert die Steuereinheit 70 automatisch die Antriebsleistung bis hin zum selbsttätigen Bremsbetrieb über die vier Elektromotoren 18, 32, die dann als Generatoren arbeiten. Die überschüssige Leistung wird in den dann motorisch arbeitenden Generator 48 in den Antrieb des Verbrennungsmotors 44 abgeführt, bis dieser seine maximal zulässige Drehzahl erreicht. Weitere überschüssige Leistung kann in Bremswiderständen 68 vernichtet und/oder gegebenenfalls in einer Fahrzeugbatterie gespeichert werden. Damit lässt sich eine unzulässige Überdrehzahl der einzelnen Radmotoren 18, 32 wirksam verhindern. Des Weiteren kann die Bedienperson durch geeignete akustische oder optische Warnsignale auf Überdrehzahlen hingewiesen werden.

**Patentansprüche**

1. Antriebssystem für Fahrzeuge, insbesondere für Nutzfahrzeuge wie landwirtschaftliche oder industrielle Schlepper, umfassend eine Vorderachse (10) mit Vorderrädern (12) und eine Hinterachse (14) mit Hinterrädern (16), **dadurch gekennzeichnet, dass** für jedes der Räder (12, 16) ein gesonderter Einzelradantriebsmotor (18, 32) und ein in dessen Antriebsstrang liegendes Umschaltgetriebe (34) mit wenigstens zwei Drehzahlübertragungsstufen vorgesehen ist, wobei eine Steuereinrichtung (70) bei Vorliegen eines mittels einer Umschalterfassungseinrichtung (73) übermittelten Umschaltbefehls automatisch zunächst die Umschaltgetriebe (34) erster diagonal gegenüberliegender Räder (12, 16) gleichzeitig schaltet und die Antriebsmotoren (18, 32) der zweiten diagonal gegenüberliegenden Räder (12, 16) für den Zeitraum des Umschaltvorgangs höher belastet, und dass die Steuereinrichtung (70) anschließend die noch nicht geschalteten, den zweiten diagonal gegenüberliegenden Rädern (12, 16) zugeordneten Umschaltgetriebe (34) gleichzeitig schaltet und die Antriebsmotoren (18, 32) der ersten diagonal gegenüberliegenden Räder (12, 16) für den Zeitraum des Umschaltvorgangs höher belastet.

**2.** Antriebssystem nach Anspruch 1, **dadurch gekennzeichnet, dass** in dem Antriebsstrang eine Kupplung (36) angeordnet ist.

**3.** Antriebssystem nach Anspruch 1 oder 2, **dadurch gekennzeichnet, dass** als Einzelradantriebsmotor eine elektrische Maschine (18, 32) oder ein Hydraulikmotor vorgesehen ist.

**4.** Antriebssystem nach Anspruch 3, **dadurch gekennzeichnet, dass** als Energiequelle für die elektrische Maschine (18, 32) ein auf dem Fahrzeug montierbarer elektrischer Energiespeicher oder ein mittels eines Verbrennungsmotors (44) angetriebener Generator (48) vorgesehen ist.

**5.** Antriebssystem nach Anspruch 3 oder 4, **dadurch gekennzeichnet, dass** die elektrische Maschine (18, 32) derart ausgebildet und ansteuerbar ist, dass sich diese in Verbindung mit dem zugehörigen Rad (12, 16) als elektrischer Antriebsmotor oder als elektrischer Bremsgenerator betreiben lässt.

**6.** Antriebssystem nach Anspruch 4 oder 5, **dadurch gekennzeichnet, dass** dem mittels des Verbrennungsmotors (44) angetriebenen Generator (48) wenigstens ein Frequenzumrichter (54) und ein Gleichstrom-Zwischenkreis (58) derart nachgeordnet ist, dass sich der mittels des Verbrennungsmotors (44) angetriebene Generator (48) im elektrischen Bremsbetrieb mittels der abgegebenen Leistung der als Bremsgenerator betriebenen elektrischen Maschine (18, 32) antreiben lässt.

**7.** Antriebssystem nach einem der Ansprüche 1 bis 6, **dadurch gekennzeichnet, dass** das Umschaltgetriebe (34) ein Planetengetriebe oder ein Schaltgetriebe umfasst.

**8.** Antriebssystem nach einem der Ansprüche 1 bis 7, **dadurch gekennzeichnet, dass** dem Einzelradantriebsmotor (18, 32) wenigstens ein die Drehzahl untersetzendes Endantriebsgetriebe (28, 38), insbesondere eine Planetenuntersetzungsstufe, nachgeordnet ist.

**9.** Antriebssystem nach einem der Ansprüche 1 bis 8, **dadurch gekennzeichnet, dass** der Einzelradantriebsmotor (18, 32) und das Umschaltgetriebe (34) innerhalb einer Radfelge angeordnet sind.

**Claims**

**1.** Drive system for vehicles, in particular for utility vehicles such as agricultural or industrial tractors, comprising a front axle (10) with front wheels (12) and a rear axle (14) with rear wheels (16), **characterized in that** a separate individual wheel drive motor (18, 32) and a change gear (34), which is situated in the drive train of the said individual wheel drive motor and has at least two rotation speed transmission stages, is provided for each of the wheels (12, 16), with a control device (70), given the presence of a changeover command which is transmitted by means of changeover detection device (73), automatically initially shifting the change gear (34) of first diagonally opposite wheels (12, 16) at the same time, and the drive motors (18, 32) of the second diagonally opposite wheels (12, 16) being subjected to higher loading for the period of the changeover process, and **in that** the control device (70) then shifts the as yet unshifted change gear (34) which is associated with the second diagonally opposite wheels (12, 16) at the same time, and the drive motors (18, 32) of the first diagonally opposite wheels (12, 16) are subjected to higher loading for the period of the changeover process.

**2.** Drive system according to Claim 1, **characterized in that** a clutch (36) is arranged in the drive train.

**3.** Drive system according to Claim 1 or 2, **characterized in that** an electrical machine (18, 32) or a hydraulic motor is provided as the individual wheel drive motor.

**4.** Drive system according to Claim 3, **characterized in that** an electrical energy storage means, which can be mounted on the vehicle, or a generator (48), which is driven by means of an internal combustion engine (44), is provided as the energy source for the electrical machine (18, 32).

**5.** Drive system according to Claim 3 or 4, **characterized in that** the electrical machine (18, 32) is formed and can be actuated in such a way that it can be operated, in conjunction with the associated wheel (12, 16), as an electric drive motor or as an electrical braking generator.

**6.** Drive system according to Claim 4 or 5,
**characterized in that** at least one frequency converter (54) and an intermediate DC circuit (58) are arranged downstream of the generator (48), which is driven by means of the internal combustion engine (44), in such a way that the generator (48) which is driven by means of the internal combustion engine (44) can be driven, during the electrical braking operation, by means of the power emitted by the electrical machine (18, 32) which is operated as a braking generator.

**7.** Drive system according to one of Claims 1 to 6, **characterized in that** the change gear (34) comprises a planetary gear or an indexing gear.

**8.** Drive system according to one of Claims 1 to 7, **characterized in that** at least one end drive gear (28, 38), in particular a planetary step-down stage, which reduces the rotation speed is arranged downstream of the individual wheel drive motor (18, 32).

**9.** Drive system according to one of Claims 1 to 8, **characterized in that** the individual wheel drive motor (18, 32) and the change gear (34) are arranged within a wheel rim.

**Revendications**

**1.** Système d'entraînement pour véhicules, en particulier pour véhicules utilitaires tels que des tracteurs agricoles ou industriels, comprenant un essieu avant (10) avec des roues avant (12) et un essieu arrière (14) avec des roues arrière (16), **caractérisé en ce que** pour chacune des roues (12, 16), on prévoit un moteur d'entraînement de roue individuel séparé (18, 32) et un mécanisme de commutation (34) situé dans sa chaîne d'entraînement, avec au moins deux étages de transfert de vitesse de rotation, un dispositif de commande (70), en présence d'un ordre de commutation transmis au moyen d'un dispositif de détection de commutation (73), commutant automatiquement d'abord simultanément le mécanisme de commutation (34) des premières roues diagonalement opposées (12, 16) et sollicitant plus fortement les moteurs d'entraînement (18, 32) des deuxièmes roues diagonalement opposées (12, 16) pendant l'intervalle de l'opération de commutation, et **en ce que** le dispositif de commande (70) commute ensuite simultanément les mécanismes de commutation (34) associés aux deuxièmes roues diagonalement opposées (12, 16) et qui n'ont pas encore été commutés et sollicite plus fortement les moteurs d'entraînement (18, 32) des premières roues diagonalement opposées (12, 16) pendant l'intervalle de l'opération de commutation.

**2.** Système d'entraînement selon la revendication 1, **caractérisé en ce que** l'on dispose un embrayage (36) dans la chaîne d'entraînement.

**3.** Système d'entraînement selon la revendication 1 ou 2, **caractérisé en ce que** l'on prévoit comme moteur d'entraînement de roue individuel un moteur électrique (18, 32) ou un moteur hydraulique.

**4.** Système d'entraînement selon la revendication 3, **caractérisé en ce que** l'on prévoit comme source d'énergie pour le moteur électrique (18, 32) un accumulateur d'énergie électrique pouvant être monté sur le véhicule ou un générateur (48) entraîné au moyen d'un moteur à combustion interne (44).

**5.** Système d'entraînement selon la revendication 3 ou 4, **caractérisé en ce que** le moteur électrique (18, 32) est réalisé et commandé de telle sorte qu'il puisse être utilisé en liaison avec la roue associée (12, 16) en tant que moteur d'entraînement ou en tant que générateur de freinage électrique.

**6.** Système d'entraînement selon la revendication 4 ou 5, **caractérisé en ce que** l'on dispose après le générateur (48) entraîné au moyen du moteur à combustion interne (44) au moins un changeur de fréquence (54) et un circuit intermédiaire à courant continu (58), de telle sorte que le générateur (48) entraîné au moyen du moteur à combustion interne (44) puisse être entraîné en mode de freinage électrique au moyen de la puissance fournie par le moteur électrique (18, 32) fonctionnant comme générateur de freinage.

**7.** Système d'entraînement selon l'une quelconque des revendications 1 à 6, **caractérisé en ce que** le mécanisme de commutation (34) comprend un engrenage planétaire ou une transmission à changements de rapports.

8. Système d'entraînement selon l'une quelconque des revendications 1 à 7, **caractérisé en ce que** l'on dispose après le moteur d'entraînement de roue individuel (18, 32) au moins un mécanisme d'entraînement de bout de réduction de la vitesse de rotation (28, 38), en particulier un étage de réduction planétaire.

9. Système d'entraînement selon l'une quelconque des revendications 1 à 8, **caractérisé en ce que** le moteur d'entraînement de roue individuel (18, 32) et le mécanisme de commutation (34) sont disposés à l'intérieur d'une jante de roue.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 812720 A1
- EP 1077150 A2
- DE 19919454 A1